# EUROPÄISCHE PATENTSCHRIFT

(11) **EP 3 818 021 B1**
(45) Veröffentlichungstag und Bekanntmachung des Hinweises auf die Patenterteilung: **23.10.2024**
(21) Anmeldenummer: 19742536.6
(22) Anmeldetag: 05.07.2019
(51) Int. Cl.: C03C 3/06, C03C 17/36

(54) **SUBSTRAT FÜR EIN REFLEKTIVES OPTISCHES ELEMENT**
SUBSTRATE FOR A REFLECTIVE OPTICAL ELEMENT
SUBSTRAT POUR UN ÉLÉMENT OPTIQUE RÉFLÉCHISSANT

(30) Priorität: 06.07.2018 DE 102018211234
(43) Veröffentlichungstag der Anmeldung: 12.05.2021
(73) Patentinhaber: Carl Zeiss SMT GmbH, 73447 Oberkochen (DE)
(72) Erfinder: EVA, Eric, 73434 Aalen (DE)
(74) Vertreter: Werner & ten Brink
(86) Internationale Anmeldenummer: PCT/EP2019/068176
(87) Internationale Veröffentlichungsnummer: WO 2020/008068

(56) Entgegenhaltungen:
- EP-A2- 1 695 375
- EP-B1- 1 094 040
- EP-B1- 1 695 375
- WO-A1-2009/145288
- DE-A1- 102009 043 824
- DE-A1- 102010 009 589
- DE-B4- 102010 009 589
- US-A1- 2010 323 872

## Beschreibung

Die vorliegende Erfindung bezieht sich auf Substrate für ein reflektives optisches Element für den extrem-ultravioletten Wellenlängenbereich aus Titan-dotiertem Quarzglas, die einen zu beschichtenden Oberflächenbereich aufweisen. Sie bezieht sich außerdem auf reflektive optische Elemente für den extrem-ultravioletten Wellenlängenbereich mit einem derartigen Substrat, das einen Oberflächenbereich mit einer reflektiven Beschichtung aufweist. Ferner bezieht sich die Erfindung auf ein optisches System mit solchen reflektiven optischen Elementen sowie auf eine EUV-Lithographievorrichtung mit einem solchen optischen System oder einem solchen reflektiven optischen Element. Die vorliegende Anmeldung nimmt die Priorität der deutschen Anmeldung 10 2018 211 234.7 vom 6. Juli 2018 in Anspruch, auf deren Inhalt vollumfänglich Bezug genommen wird.

Um bei der Produktion von beispielsweise Halbleiterbauelementen mit lithographischen Methoden immer feinere Strukturen erzeugen zu können, wird mit immer kurzwelligerem Licht gearbeitet. Arbeitet man im extremen ultravioletten (EUV) Wellenlängenbereich, etwa bei Wellenlängen zwischen ca. 5 nm und 20 nm, lässt sich nicht mehr mit linsenartigen Elementen in Transmission arbeiten, sondern es werden Beleuchtungs- und Projektionsobjektive aus Spiegelelementen mit an die jeweilige Arbeitswellenlänge angepassten Reflexbeschichtungen aufgebaut.

Als Substratmaterial insbesondere für reflektive optische Elemente für die EUV-Lithographie werden sogenannte Nullausdehnungsmaterialien verwendet, deren Wärmeausdehnungskoeffizient im Bereich der während des Lithographiebetriebs herrschenden Temperaturen, die etwas über Raumtemperatur liegen, gegen Null geht. Im Vordergrund stehen dabei Glaskeramiken und Titan-dotiertes Quarzglas. Diese Materialien lassen sich so herstellen, dass bei einer vom konkreten Material abhängigen Temperatur der Wärmeausdehnungskoeffizient, der hier als Differential nach der Temperatur der relativen Längenausdehnung in Abhängigkeit von der Temperatur definiert ist, gleich Null wird. Bei Titan-dotiertem Quarzglas kann auf diesen Effekt durch den Gehalt an Zusatzstoffen Einfluss genommen werden, bei Glaskeramiken durch Rekristallisationsvorgänge unter streng kontrollierten Nachheizzyklen.

EUV-Lithographievorrichtungen sind darauf angewiesen, dass die zur Abbildung einer Maske in eine Bildebene genutzten reflektiven optischen Elemente eine hohe Genauigkeit ihrer Oberflächenform aufweisen. Ebenso sollten Masken als reflektive optische Elemente für den EUV-Wellenlängenbereich eine hohe Genauigkeit ihrer Oberflächenform aufweisen, da ihr Ersatz sich in nicht unerheblicher Weise in den Betriebskosten einer EUV-Lithographievorrichtung niederschlägt.

Herkömmliche Methoden zur Korrektur der Oberflächen basieren in der Regel darauf, das Substratmaterial von optischen Elementen mechanisch oder durch Bestrahlen mit Ionen abzutragen. Ein weiterer Ansatz zur Korrektur der Oberflächen besteht darin, Substratmaterial von optischen Elementen durch Bestrahlung mit elektromagnetischer Strahlung oder bevorzugt mit Elektronen lokal zu verdichten. Diese Vorgehensweise wird beispielsweise in der WO 2013/050199 A1 beschrieben und hat den Vorteil, auch bei bereits beschichteten Substraten, insbesondere reflektiven optischen Elementen, eingesetzt werden zu können.

Allerdings hat sich herausgestellt, dass die durch Verdichtung mittels Bestrahlung durchgeführten Korrekturen der Oberflächenform Relaxationseffekte zeigen, insbesondere bei Lagerung und Betrieb der reflektiven optischen Elemente, die sich negativ auf die Abbildungseigenschaften auswirken können. Insbesondere kann nicht ausgeschlossen werden, dass sich nach wenigen Jahren die Korrekturen ganz zurückbilden.

Aus der WO 2009/145288 A1 ist ein Substrat für reflektive optische Elemente für den EUV-Wellenlängenbereich aus titandotiertem Quarzglas bekannt, das einen Wasserstoffgehalt von mindestens 15*10¹⁷ Moleküle/cm³ aufweist. In der DE 10 2010 009 589 A1 wird ein Substrat für reflektive optische Elemente für den EUV-Wellenlängenbereich aus titandotiertem Quarzglas beschrieben, das einen mittleren Wasserstoffgehalt von mindestens 1*10¹⁶ Molekülen/cm³ aufweist.

Es ist eine Aufgabe der vorliegenden Erfindung, eine Möglichkeit aufzuzeigen, die Langzeitstabilität der Oberflächenform eines reflektiven optischen Elements zu verbessern.

Diese Aufgabe wird gelöst durch ein Substrat für ein reflektives optisches Element für den extrem-ultravioletten Wellenlängenbereich aus Titan-dotiertem Quarzglas, das einen zu beschichtenden Oberflächenbereich aufweist, wobei das Titan-dotierte Quarzglas mindestens in der Nähe des Oberflächenbereichs einen Anteil von Si-O-O-Si-Bindungen von mindestens 1*10¹⁶/cm³ oder einen Anteil von Si-Si-Bindungen von mindestens 1*10¹⁶/cm³ aufweist.

Dem liegt der Ansatz zugrunde, die Relaxation nach einer Verdichtung des Substratmaterials durch gezieltes Verändern der Struktur der Glasmatrix zu beeinflussen zu versuchen.

Es wird davon ausgegangen, dass sowohl Peroxy-Bindungen in der Glasmatrix (Si-O-O-Si) oder Si-Si-Bindungen (auf englisch auch oxygen deficient centers genannt) quasi Sollbruchstellen bilden, die unter dem Einfluss von energiereicher Bestrahlung, insbesondere mit Elektronen, wie sie zum Verdichten eingesetzt wird, besonders leicht aufbrechen, im Gegensatz zu normalen Matrixbindungen aber nicht so leicht rekombinieren können. Ein Substrat mit einer solchen nicht-stöchiometrischen Matrix kann leicht kompaktiert werden. Es relaxiert aber weniger als ein Substrat mit einer stöchiometrischen Matrix, bei dem sich etwa engere SiO₂-Ringe bilden oder auch normale Si-O-Bindungen innerhalb der tetraedrischen Grundstruktur von Quarzglas aufbrechen. Die Oberflächenform eines hier vorgeschlagenen Substrats sollte daher eine bessere Langzeitstabilität aufweisen.

Vorzugsweise weist das Titan-dotierte Quarzglas mindestens in der Nähe des Oberflächenbereichs einen Anteil von Si-O-O-Si-Bindungen von mindestens 1*10¹⁷/cm³ oder sogar mindestens 5*10¹⁷/cm³, bevorzugt mindestens 1*10¹⁸/cm³ oder sogar mindestens 5*10¹⁸/cm³, besonders bevorzugt mindestens 1*10¹⁹/cm³ oder sogar mindestens 5*10¹⁹/cm³, ganz besonders bevorzugt mindestens 1*10²⁰/cm³ oder einen Anteil von Si-Si-Bindungen von mindestens 1*10¹⁷/cm³ oder sogar mindestens 5*10¹⁷/cm³, bevorzugt mindestens 1*10¹⁸/cm³ oder sogar mindestens 5*10¹⁸/cm³, besonders bevorzugt mindestens 1*10¹⁹/cm³ oder sogar mindestens 5*10¹⁹/cm³, ganz besonders bevorzugt mindestens 1*10²⁰/cm³ auf. Je mehr Sollbruchstellen in Form von Si-O-O-Si-Bindungen oder Si-Si-Bindungen in der Matrix vorhanden sind, desto eher lässt sich ein Langzeitrelaxieren von durch Bestrahlung vorgenommenen Oberflächenkorrekturen unterdrücken.

In einer bevorzugten Ausführungsform weist das Titan-dotierte Quarzglas mindestens in der Nähe des Oberflächenbereichs einen mittleren Hydroxylgehalt von höchstens 100 Gew.-ppm auf. Es wurde erkannt, dass eine Relaxation von Verdichtungen in der Matrix von insbesondere Titan-dotiertem Quarzglas strukturell durch Verschiebungen in der Glasmatrix oder durch Rekombination gebrochener Bindungen erfolgen kann. Die Glasmatrix ist besonders dann zu Verschiebungen in der Lage, wenn sie reich an Matrixterminatoren ist. Unter Matrixterminatoren seien hier Störungen verstanden, die die strikte Tetraederstruktur einer idealen Quarzglasmatrix unterbrechen, in der jedes Silizium- oder Titanatom vierfach über jeweils ein Sauerstoffatom koordiniert ist. Zu den Matrixterminatoren gehören abgesehen von Hydroxyl beispielsweise SiF, SiOH, SiH, TiF, TiOH, TiH, TiOs und TiOz. Es wird angestrebt, parallel zu einer möglichst hohen Anzahl von Sollbruchstellen die Anzahl von Hydroxyl-Gruppen möglichst gering zu halten, um damit die Wahrscheinlichkeit eines Relaxierens nach einem Verdichten über längere Zeiträume möglichst weiter zu verringern.

In solchen Ausführungsformen kann das Titan-dotierte Quarzglas in der Nähe des Oberflächenbereichs einen Gehalt an weiteren Matrixterminatoren abgesehen von solchen mit einer Hydroxylgruppe von maximal 20% des Hydroxylgehalts aufweisen, um den Effekt einer geringeren Relaxation nach Verdichtung weiter verstärken zu können.

Vorteilhafterweise weist das Titan-dotierte Quarzglas mindestens in der Nähe des Oberflächenbereichs einen Wasserstoffgehalt von weniger als 1×10¹⁶ Moleküle/cm³ auf. Denn es hat sich gezeigt, dass insbesondere bei höheren Temperaturen Wasserstoff zur Bildung von SiH und SiOH an geschwächten Bindungen führen kann, die wiederum als Matrixterminatoren wirken können.

Vorzugsweise weist das Titan-dotierte Quarzglas mindestens in der Nähe des Oberflächenbereichs Siliziumfluorid oder Siliziumchlorid auf.

Vorteilhafterweise weist das Titan-dotierte Quarzglas entlang einer gedachten Linie senkrecht zum Oberflächenbereich über eine Länge von 500 nm oder mehr einen Wasserstoffgehalt von mehr als 5×10¹⁸ Moleküle/cm³ auf.

Dies beruht auf der Annahme, dass stark mit Wasserstoff beladenes Titan-dotiertes Quarzglas bei Bestrahlung eine stärkere Materialverdichtung aufweisen kann als geringer mit Wasserstoff beladenes Titan-dotiertes Quarzglas. Es wird davon ausgegangen, dass gebrochene Matrixbindungen der Form Si-O-Si -> Si + Si-O· in Anwesenheit eines Überangebots von Wasserstoff zu SiH und SiOH reagieren, während sie bei Wasserstoffmangel zum Teil wieder rekombinieren. Man nimmt an, dass wenn man einem wasserstoffarmen und zumindest lokal verdichteten Substrat viel Wasserstoff zuführt, beispielsweise durch Einbringen in eine wasserstoffhaltige Atmosphäre oder Spülen mit wasserstoffhaltigem Gas, dadurch rearrangierte, aber energetisch ungünstige Bindungen angegriffen und abgesättigt werden können, was ein langsames Relaxieren unterdrücken dürfte. Wenn nun dem Substrat vor einer Verdichtung viel Wasserstoff zugeführt wird, so führt vermutlich eine Verdichtung weniger zu einem Rearrangieren der Matrix, sondern mehr zu dauerhaft gebrochenen Bindungen. Dadurch sollte die Relaxationsrate sinken und damit eine bessere Langzeitstabilität der Oberfläche des Substrats erreicht werden können. Bevorzugt weist das Substrat einen Bereich einer Dicke von mindestens 500 nm mit erhöhtem Wasserstoffgehalt vor, während und unmittelbar nach dem Verdichten zu Korrekturzwecken in der Nähe des Oberflächenbereichs auf.

Insbesondere kann das Titan-dotierte Quarzglas entlang einer gedachten Linie senkrecht zum Oberflächenbereich über eine Länge von 500 nm oder mehr einen Wasserstoffgehalt von mehr als 1×10¹⁹ Moleküle/cm³, besonders bevorzugt von mehr als 1×10²⁰ Moleküle/cm³ aufweisen, um die Relaxationsrate stärker senken zu können. Besonders bevorzugt weist das Titan-dotierte Quarzglas des hier vorgeschlagenen Substrats diesen hohen Wasserstoffgehalt vor, während und/oder unmittelbar nach der Bestrahlung auf.

Je mehr Sollbruchstellen in Form von Si-O-O-Si-Bindungen oder Si-Si-Bindungen in der Matrix vorhanden sind, desto eher lässt sich ein Langzeitrelaxieren von durch Bestrahlung vorgenommenen Oberflächenkorrekturen unterdrücken.

Ferner wird diese Aufgabe gelöst durch ein reflektives optisches Element für den extrem-ultravioletten Wellenlängenbereich mit einem Substrat wie soeben beschrieben, das einen Oberflächenbereich mit einer reflektiven Beschichtung aufweist.

Wegen der besonderen hier vorgeschlagenen Substratmaterialien sind diese reflektiven optischen Elemente besonders gut dafür geeignet, in ihrer Oberflächenform durch Bestrahlung und entsprechender Verdichtung des Substratmaterials korrigiert zu werden. Denn die Relaxation dieser Verdichtung wirkt sich, insbesondere über lange Zeiträume von Monaten und Jahren, geringer aus als bei Substraten aus herkömmlichen Titan-dotierten Quarzgläsern. Der für das jeweilige reflektive optische Element gewünschte Oberflächenverlauf des Substrats kann im Wesentlichen schon vor dem Aufbringen einer reflektiven Beschichtung ausgeformt werden, wobei zu diesem Zweck auch auf Bestrahlung zurückgegriffen werden kann, die zumindest im bestrahlten Bereich zu einer Verdichtung und damit einer Änderung des Oberflächenverlaufs führen kann. Nach dem Beschichten kann das jeweilige reflektive optische Element für sich oder in Kombination mit weiteren optischen Elementen wie in der gewünschten Funktion überprüft und anschließend entsprechend feinkorrigiert werden.

In bevorzugten Ausführungsformen weist das Substrat entlang einer gedachten Linie senkrecht zum Oberflächenbereich mit der reflektiven Beschichtung über eine Länge von 500 nm oder mehr einen Wasserstoffgehalt von mehr als 5×10¹⁸ Moleküle/cm³, bevorzugt mehr als 1×10¹⁹ Moleküle/cm³, besonders bevorzugt von mehr als 1×10²⁰ Moleküle/cm³ auf, um die Relaxationsrate stärker senken zu können.

Besonders bevorzugt weist die Länge von 500 nm oder mehr einen Abstand zur reflektiven Beschichtung von nicht mehr als 1 mm, bevorzugt nicht mehr als 100 µm, besonders bevorzugt nicht mehr als 20 µm, ganz besonders bevorzugt nicht mehr als 5 µm auf. Denn es hat sich herausgestellt, dass es ausreichend ist, wenn der gewünscht hohe Wasserstoffgehalt sich insbesondere im Bereich unmittelbar unter der reflektiven Beschichtung ausbildet, in dem auch die Korrekturen ausgeführt werden, deren Relaxation minimiert werden soll.

Besonders bevorzugt weist das Substrat entlang der gedachten Linie senkrecht zum Oberflächenbereich mit der reflektiven Beschichtung in einem Abstand zu dieser von mindestens 1 mm, bevorzugt mindestens 1 cm einen Wasserstoffgehalt von weniger als 5×10¹⁷ Moleküle/cm³, bevorzugt weniger als 1×10¹⁷ Moleküle/cm³, besonders bevorzugt von weniger als 1×10¹⁶ Moleküle/cm³ auf. Indem das Substrat in seinem Inneren, also insbesondere abgesehen vom Bereich unmittelbar unterhalb der reflektiven Beschichtung einen geringeren Wasserstoffgehalt aufweist, kann gewährleistet werden, dass sonstige Materialeigenschaften des Titan-dotierten Quarzglases nicht durch einen zu hohen Wasserstoffgehalt negativ beeinflusst werden.

Vorteilhafterweise weist das Substrat innerhalb eines Zeitraums von bis zu einem Monat nach Aufbringen der reflektiven Beschichtung entlang einer gedachten Linie senkrecht zum Oberflächenbereich mit der reflektiven Beschichtung über eine Länge von 500 nm oder mehr einen Wasserstoffgehalt von mehr als 5×10¹⁸ Moleküle/cm³ auf und innerhalb eines Zeitraums ab einem Monat nach Aufbringen der reflektiven Beschichtung bis zu sieben Jahren nach Aufbringen der reflektiven Beschichtung einen Wasserstoffgehalt von mehr als 1×10¹⁸ Moleküle/cm³. Es wird erwartet, dass dieses Langzeitverhalten des Wasserstoffgehalts zu einer möglichst geringen Relaxation auch über einen Zeitraum von mehreren Jahren von in das reflektive optische Element eingebrachten Korrekturen führen kann.

Bei einem reflektiven optischen Element, dessen Substrat einen weiteren Oberflächenbereich aufweist, der sich auf einer dem Oberflächenbereich mit der reflektiven Beschichtung abgewandten Seite des Substrats befindet und keine reflektive Beschichtung aufweist, weist bevorzugt das Substrat entlang der gedachten Linie über eine weitere Länge von 500 nm oder mehr mit einem Abstand von nicht mehr als 2 mm von der Oberfläche des weiteren, unbeschichteten Oberflächenbereichs einen Wasserstoffgehalt von nicht mehr als die Hälfte und nicht weniger als ein Zwanzigstel des Wasserstoffgehalts über der Länge im Abstand von nicht mehr als 1 mm von der reflektiven Beschichtung auf.

Ferner wird die Aufgabe gelöst durch ein optisches System mit einem reflektiven optischen Element wie zuvor beschrieben sowie durch eine EUV-Lithographievorrichtung mit einem solchen optischen System oder mit einem reflektiven optischen Element wie zuvor beschrieben. Auf diese Weise können optische Systeme bzw. EUV-Lithographievorrichtungen zur Verfügung gestellt werden, die gute optische Eigenschaften mit guter Langzeitstabilität aufweisen können. Weitere bevorzugte Anwendungen der auf den hier vorgeschlagenen Substraten basierenden reflektiven optischen Elemente sind u.a. optische Systeme für Inspektionssysteme für beispielsweise Wafer oder Masken oder für spektroskopische Anwendungen, etwa in der Astrophysik, insbesondere der extraterrestrischen Physik.

Die vorliegende Erfindung soll unter Bezugnahme auf bevorzugte Ausführungsbeispiele näher erläutert werden. Dazu zeigen
- Figur 1: schematisch eine Ausführungsform einer EUV-Lithographievorrichtung;
- Figur 2: eine Prinzipskizze einer ersten Ausführungsform eines vorgeschlagenen reflektiven optischen Elements;
- Figur 3: eine Prinzipskizze einer zweiten Ausführungsform eines vorgeschlagenen reflektiven optischen Elements;
- Figur 4: die Verteilung des Wasserstoffgehalts über die Breite des Substrats eines reflektiven optischen Elements zu einem ersten Zeitpunkt; und
- Figur 5: die Verteilung des Wasserstoffgehalts über die Breite des Substrats eines reflektiven optischen Elements zu einem zweiten Zeitpunkt.

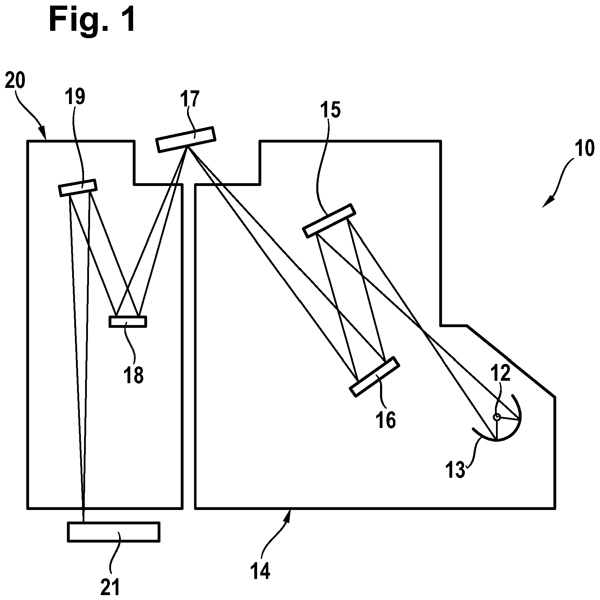

In Figur 1 ist schematisch eine EUV-Lithographievorrichtung 10 dargestellt. Wesentliche Komponenten sind das Beleuchtungssystem 14, die Photomaske 17 und das Projektionssystem 20. Die EUV-Lithographievorrichtung 10 wird unter Vakuumbedingungen betrieben, damit die EUV-Strahlung in ihrem Inneren möglichst wenig absorbiert wird.

Als Strahlungsquelle 12 kann beispielsweise eine Plasmaquelle oder auch ein Synchrotron dienen. Im hier dargestellten Beispiel handelt es sich um eine Plasmaquelle. Die emittierte Strahlung im Wellenlängenbereich von etwa 5 nm bis 20 nm wird zunächst vom Kollektorspiegel 13 gebündelt. Der Betriebsstrahl wird dann in das Beleuchtungssystem 14 eingeführt. Im in Figur 1 dargestellten Beispiel weist das Beleuchtungssystem 14 zwei Spiegel 15, 16 auf. Die Spiegel 15, 16 leiten den Strahl auf die Photomaske 17, die die Struktur aufweist, die auf den Wafer 21 abgebildet werden soll. Bei der Photomaske 17 handelt es sich ebenfalls um ein reflektives optisches Element für den EUV- und weichen Röntgenwellenlängenbereich, das je nach Herstellungsprozess ausgewechselt wird. Mit Hilfe des Projektionssystems 20 wird der von der Photomaske 17 reflektierte Strahl auf den Wafer 21 projiziert und dadurch die Struktur der Photomaske auf ihn abgebildet. Das Projektionssystem 20 weist im dargestellten Beispiel zwei Spiegel 18, 19 auf. Es sei darauf hingewiesen, dass sowohl das Projektionssystem 20 als auch das Beleuchtungssystem 14 jeweils nur einen oder auch drei, vier, fünf und mehr Spiegel aufweisen können.

Grundsätzlich können alle reflektiven optischen Elemente 13, 15, 16, 17, 18, 19 der EUV-Lithographievorrichtung 10 ein Substrat aus Titan-dotiertem Quarzglas aufweisen, das einen zu beschichtenden Oberflächenbereich aufweist, wobei das Titan-dotierte Quarzglas mindestens in der Nähe des Oberflächenbereichs einen Anteil von Si-O-O-Si-Bindungen von mindestens 1*10¹⁶/cm³ und/oder einen Anteil von Si-Si-Bindungen von mindestens 1*10¹⁶/ cm³ bzw. entlang einer gedachten Linie senkrecht zum Oberflächenbereich über eine Länge von 500 nm oder mehr einen Wasserstoffgehalt von mehr als 5×10¹⁸ Moleküle/cm³ aufweist. Die Möglichkeit, eine langzeitstabile Feinkorrektur des Oberflächenverlaufs durchführen zu können, ist insbesondere bei Spiegeln des Projektionssystems 20 von Bedeutung, da im Projektionssystem idealerweise möglichst exakte Abbildungseigenschaften vorliegen sollten. Die genannten reflektiven optischen Elemente können in ihrem jeweiligen Substrat wenigstens entlang einer gedachten Linie senkrecht zum Oberflächenbereich mit der reflektiven Beschichtung über eine Länge von 500 nm oder mehr einen Wasserstoffgehalt von mehr als 5×10¹⁸ Moleküle/cm³, bevorzugt mehr als 1×10¹⁹ Moleküle/cm³, besonders bevorzugt von mehr als 1×10²⁰ Moleküle/cm³ aufweisen.

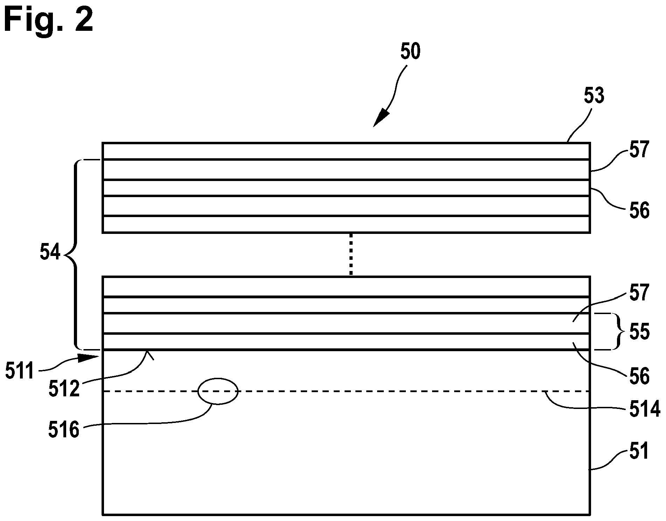

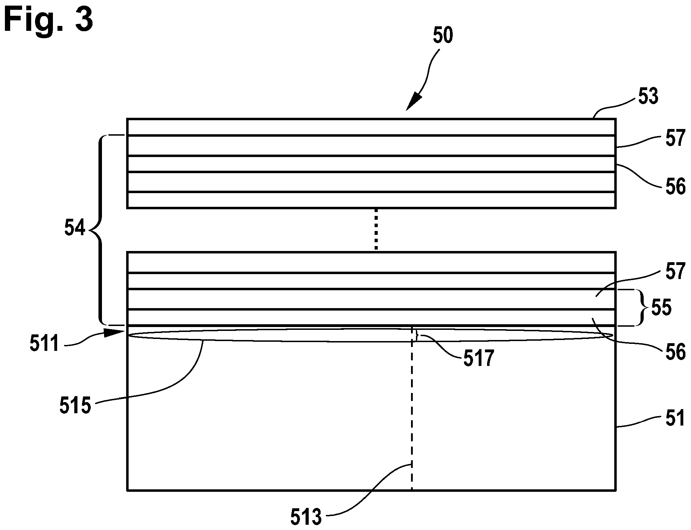

Im hier dargestellten Beispiel handelt es sich bei den Beleuchtungssystemspiegeln 15, 16, der Photomaske 17 und den Projektionssystemspiegeln 18, 19 um Spiegel 50 für quasinormalen Einfall, deren reflektive Beschichtung auf einem Viellagensystem 54 basiert, wie schematisch in den Figuren 2 und 3 dargestellt. Dabei handelt es sich um alternierend aufgebrachte Lagen eines Materials mit höherem Realteil des Brechungsindex bei der Arbeitswellenlänge, bei der beispielsweise die lithographische Belichtung durchgeführt wird, (auch Spacer 57 genannt) und eines Materials mit niedrigerem Realteil des Brechungsindex bei der Arbeitswellenlänge (auch Absorber 56 genannt), wobei ein Absorber-Spacer-Paar einen Stapel 55 bildet. Dadurch wird in gewisser Weise ein Kristall simuliert, dessen Netzebenen den Absorberlagen entsprechen, an denen Bragg-Reflexion stattfindet. Die Dicken der einzelnen Lagen 56, 57 wie auch der sich wiederholenden Stapel 55 können über das gesamte Viellagensystem 54 konstant sein oder auch variieren, je nach dem, welches spektrale oder winkelabhängige Reflexionsprofil erreicht werden soll. Das Reflexionsprofil kann auch gezielt beeinflusst werden, indem die Grundstruktur aus Absorber 56 und Spacer 57 um weitere mehr und weniger absorbierende Materialien ergänzt wird, um die mögliche maximale Reflektivität bei der jeweiligen Arbeitswellenlänge zu erhöhen. Dazu können in manchen Stapeln Absorber und/oder Spacer-Materialien gegeneinander ausgetauscht werden oder die Stapel aus mehr als einem Absorber- und/ oder Spacermaterial aufgebaut werden. Die Absorber- und Spacermaterialien können über alle Stapel konstante oder auch variierende Dicken aufweisen, um die Reflektivität zu optimieren. Ferner können auch zusätzliche Lagen als Diffusionsbarrieren zwischen Spacer- und Absorberlagen 57, 56 vorgesehen werden. Eine beispielsweise für eine Arbeitswellenlänge von 13,4 nm übliche Materialkombination ist Molybdän als Absorber- und Silizium als Spacermaterial. Dabei hat ein Stapel 55 meist eine Dicke von knapp 7 nm, wobei die Spacerlage 57 meist dicker ist als die Absorberlage 56.

Im hier dargestellten Beispiel weist die Beschichtung 52 zusätzlich eine optionale Schutzschicht 53 auf, die auch aus mehr als einer Lage bestehen kann. Die Schutzschicht 53 kann beispielsweise bei einem Molybdän-Silizium-Viellagensystem u.a. aus einer Lage Siliziumnitrid und einer Lage Ruthenium als Abschluss zum Vakuum aufgebaut sein, um etwa bei Wellenlängen um ca. 13,5 nm eingesetzt zu werden. Dem Fachmann sind weitere geeignete Materialkombinationen, auch für andere Wellenlängen im EUV-Wellenlängenbereich bekannt.

Grundsätzlich können die hier vorgeschlagenen reflektiven optischen Elemente auch für streifenden Einfall ausgelegt sein. Dazu können eine oder wenige metallische Schichten auf dem Substrat vorgesehen sein, die die EUV-Strahlung basierend auf dem Phänomen der Totalreflexion reflektieren.

Die Beschichtung 54 ist auf einem Substrat 51 aus Titan-dotiertem Quarzglas angeordnet. In einer ersten Variante weist das Substrat 51 des reflektiven optischen Elements für den extrem-ultravioletten Wellenlängenbereich, beispielsweise ein Spiegel aus dem Projektionssystem einer EUV-Lithographievorrichtung, einen zu beschichtenden und hier bereits wie beschrieben beschichteten Oberflächenbereich 511 auf. Zumindest in der Nähe des Oberflächenbereichs 511 weist das Substrat 51 einen Anteil von Si-O-O-Si-Bindungen von mindestens 1*10¹⁶/cm³ und/oder einen Anteil von Si-Si-Bindungen von mindestens 1*10¹⁶/cm³ auf. Besonders vorteilhaft ist es, wenn das Titan-dotierte Quarzglas mindestens in der Nähe des Oberflächenbereichs 511 einen Anteil von Si-O-O-Si-Bindungen von mindestens 1*10¹⁷/cm³ oder sogar mindestens 5*10¹⁷/cm³, bevorzugt mindestens 1*10¹⁸/ cm³ oder sogar mindestens 5*10¹⁸/cm³, besonders bevorzugt mindestens 1*10¹⁹/cm³ oder sogar mindestens 5*10¹⁹/cm³, ganz besonders bevorzugt mindestens 1*10²⁰/cm³ und/oder Anteil von Si-Si-Bindungen von mindestens 1*10¹⁷/cm³ oder sogar mindestens 5*10¹⁷/cm³, bevorzugt mindestens 1*10¹⁸/cm³ oder sogar mindestens 5*10¹⁸/cm³, besonders bevorzugt mindestens 1*10¹⁹/cm³ oder sogar mindestens 5*10¹⁹/cm³, ganz besonders bevorzugt mindestens 1*10²⁰/cm³ aufweist.

Je höher der Anteil dieser Bindungen an der Quarzglasmatrix ist, desto mehr Sollbruchstellen liegen vor, die bei energiereicher Bestrahlung besonders leicht brechen. Dadurch lässt sich das entsprechende Titan-dotierte Quarzglas besonders gut bei energiereicher Bestrahlung kompaktieren, also verdichten. Da diese Bindungen sich nicht so leicht rekombinieren lassen wie normale Matrixbindungen, also nicht so leicht nach der strahlungsbedingten Kombinierung wieder in ihren Ausgangszustand zurückkehren, weisen derartige Substrate ein geringeres Relaxieren als bei herkömmlichen Substraten auf Basis von Titan-dotiertem Quarzglas auf. Titan-dotiertes Quarzglas mit einer solchen Zusammensetzung kann bei Flammenhydrolyse bzw. über ein Sootverfahren unter oxidierenden Bedingungen für einen gesteigerten Anteil von Si-O-O-Si-Bindungen oder unter reduzierenden Bedingungen für einen gesteigerten Anteil von Si-Si-Bindungen erhalten werden. Bei der Flammenhydrolyse lässt sich die Flamme etwa bei Sauerstoffüberschuss (oxidierende Bedingungen) oder bei Wasserstoffüberschuss (reduzierende Bedingungen) betreiben. Im Falle eines Sootverfahrens kann für oxidierende Bedingungen stattdessen oder zusätzlich das SiO₂-Pulver in Sauerstoff-, Lachgas- oder Wasserdampfatmosphäre bei erhöhter Temperatur behandelt werden. Um reduzierende Bedingungen zu erreichen, kann eine physikalische Trocknung mittels erhöhter Temperatur und/oder Anlegen eines Vakuums oder eine chemische Trocknung unter Zugabe von Halogenen erfolgen, so dass sich etwa Siliziumchlorid oder Siliziumfluorid bilden.

In Varianten weist das Substrat 51 zusätzlich zumindest in der Nähe des Oberflächenbereichs 511 einen mittleren Hydroxylgehalt von höchstens 100 Gew.-ppm auf, um dadurch eine reduzierte Anzahl von Matrixterminatoren bereitzustellen und die Wahrscheinlichkeit eines Relaxierens nach einer Kompaktierung zu verringern. Besonders bevorzugt weist das Substrat 51 zumindest in der Nähe des Oberflächenbereichs 514 einen Matrixterminatorengehalt von maximal 20% des Hydroxylgehalts auf, um die Wahrscheinlichkeit eines Relaxierens noch weiter zu mindern. Weitere Matrixterminatoren neben OH-Gruppen können beispielsweise SiOH, SiF, SiH, TiOH, TiF, TiH, TiO₂, TiO₃ sein. Bevorzugt werden die Rohlinge für solche Substrate über Sootverfahren hergestellt. Den Hydroxylgehalt kann man insbesondere durch Trocknen bzw. bzw. Herstellen und Lagern in besonders trockener Atmosphäre reduzieren.

Vorteilhafterweise weist das Substrat bei dieser Variante in der Nähe des Oberflächenbereichs 511 oder weiter im Inneren des Substrats 51 einen Wasserstoffgehalt von weniger als 1×10¹⁶ Moleküle/cm³ auf, um nicht Gefahr zu gehen, durch einen leichten Anstieg wasserstoffbedingter Matrixterminatoren wie SiOH und SiH den durch die hohe Reinheit des Titan-dotierten Quarzglases erreichten Effekt wieder zu mindern. Der Wasserstoffgehalt kann beispielsweise dadurch reduziert werden, dass im Falle der Flammenhydrolyse die Direktabscheidung von Quarzglas in einer wasserstoffarmen, reduzierenden Atmosphäre durchgeführt wird, indem beispielsweise Erdgas oder Methan statt Knallgas als Brennmittel eingesetzt wird. Über Sootverfahren abgeschiedenes Quarzglas weist a priori keinen Wasserstoff auf, sofern er nicht gezielt zugesetzt wird.

In einer zweiten Variante, die schematisch in Figur 3 dargestellt ist, weist das Substrat 51 entlang einer gedachten Linie 513 senkrecht zum Oberflächenbereich 511 über eine Länge 517 von 500 nm oder mehr einen Wasserstoffgehalt von mehr als 5×10¹⁸ Moleküle/cm³, bevorzugt von mehr als 1×10¹⁹ Moleküle/cm³, besonders bevorzugt von mehr als 1×10²⁰ Moleküle/cm³ auf. Dadurch können bei der Kompaktierung durch energiereiche Bestrahlung vermehrt dauerhaft gebrochenen Bindungen generiert werden, die ein Relaxieren der Kompaktierung reduzieren können. Im hier dargestellten Beispiel befindet sich der Bereich 515 mit erhöhtem Wasserstoffgehalt im Oberflächenbereich 511 unterhalb der reflektiven Beschichtung 54. Die Länge 517 von 500 nm, über die das Substrat 51 einen besonders hohen Wasserstoffgehalt aufweist, weist im hier dargestellten Beispiel einen Abstand zur reflektiven Beschichtung 54 von nicht mehr als 1 mm, bevorzugt nicht mehr als 100 µm, besonders bevorzugt nicht mehr als 20 µm, ganz besonders bevorzugt nicht mehr als 5 µm auf, so dass das Substrat 51 möglichst nah an der reflektiven Beschichtung 54 einen gewünscht hohen Wasserstoffgehalt aufweist. In größerem Abstand von der reflektiven Beschichtung 54 längs der gedachten Linie 513 senkrecht zum Oberflächenbereich 511 weist das Substrat 51 im hier dargestellten Beispiel einen geringeren Wasserstoffgehalt auf, wie er auch bei herkömmlichen Titan-dotierten Quarzgläsern vorkommen kann. Insbesondere weist das Substrat 51 entlang der gedachten Linie 513 senkrecht zum Oberflächenbereich 511 mit der reflektiven Beschichtung 54 in einem Abstand zu dieser von mindestens 1 mm, bevorzugt mindestens 1 cm einen Wasserstoffgehalt von weniger als 5×10¹⁷ Moleküle/cm³, bevorzugt weniger als 1×10¹⁷ Moleküle/cm³, besonders bevorzugt von weniger als 1×10¹⁶ Moleküle/cm³ auf.

Der Titan-dotierte Quarzglas-Rohling kann bereits vor seiner Verarbeitung zu einem Substrat bei Temperaturen über Raumtemperatur, etwa im Bereich bis 600°C, bevorzugt bei ca. 100°C bis 200°C insbesondere in der Nähe des Oberflächenbereichs 511 mit einem hohen Wasserstoffgehalt aufgeladen werden. Höhere Temperaturen, etwa im Bereich von 400°C bis 600°C erlauben ein schnelleres Erreichen des gewünschten Wasserstoffgehalts bzw. besonders hohe Wasserstoffgehalte. Allerdings kann sich bei höheren Temperaturen verstärkt Ti3+ bilden, das zu Schwärzungen des Quarzglases führen und auch einen unerwünschten Einfluss auf den Wärmeausdehnungskoeffizienten des Quarzglases haben kann.

Der Rohling kann auch zunächst weitgehend oder vollständig auf Endform bearbeitet werden, so dass ein im Wesentlichen beschichtbares Substrat bereitsteht, das vor dem Beschichten mit Wasserstoff beladen wird. Sowohl der Rohling als auch das im Wesentlichen beschichtbare Substrat können bevorzugt im Autoklaven bei Wasserstoffpartialdrücken im Bereich von bevorzugt ca. 10 atm bis 100 atm mit Wasserstoff beladen werden. Insbesondere bei höheren Drücken können besonders schmale Wasserstoffgradienten mit hohen Gehalten im Oberflächenbereich erhalten werden.

Für den Fall, dass nach dem Beladen mit Wasserstoff und vor dem Beschichten durch Polieren Material von der Oberfläche entfernt wird, kann sich das Maximum der Verteilung des Wasserstoffgehalts besonders nah unterhalb der dann aufgebrachten reflektiven Beschichtung befinden. Simulationen lassen erwarten, dass auch wenn beispielsweise durch längere Lagerzeiten zwischen Beladung und Beschichtung oder gezieltes Tempern der Wasserstoffgehalt im Oberflächenbereich, insbesondere in unmittelbarer Nähe unterhalb der reflektiven Beschichtung kurz nach der Beschichtung etwas geringer als gewünscht ist, sich der Wasserstoffgehalt über Monate und Jahre unterhalb der reflektiven Beschichtung anreichert.

Nach der Beschichtung können noch vorhandene oder während des Beschichtungsvorgangs aufgetretene Oberflächenfehler durch kompaktierende Bestrahlung korrigiert werden. Es kann auch, wahlweise schon vor der Beschichtung, ein flächiger Kompaktierungsvorgang über zumindest die gesamte beschichtete Fläche durchgeführt werden, bei der in den bestrahlten Substratbereichen mit hohem Wasserstoffgehalt Bindungen aufgebrochen und als SiH oder SiOH abgesättigt werden, um die Langzeitstabilität des reflektiven optischen Elements insgesamt zusätzlich zu erhöhen. Bei anschließender Lagerung kann der Wasserstoff weiter in das Substrat hineindiffundieren sowie insbesondere an unbeschichteten Flächen auch aus dem Substrat austreten. So sind etwa Mo/Si-Viellagenbeschichtungen gute Diffusionsbarrieren für Wasserstoff. Simulationen lassen erwarten, dass Substrate, die vor dem Beschichten im Bereich ihrer Oberflächen mit Wasserstoff beladen werden, auch nach mehreren Jahren Lagerung im Bereich der z.B. mit einer Mo/Si-Viellagensystem beschichteten Oberfläche nach wie vor sehr hohe Wasserstoffgehalte aufweisen. An den unbeschichteten Oberflächenbereichen hingegen kann der Wasserstoffgehalt bereits innerhalb von Monaten deutlich sinken. Insbesondere können reflektive optische Elemente entsprechend Variante 2 und wie in Verbindung mit Figur 3 beschrieben, Substrate 51 aufweisen, die innerhalb eines Zeitraums von bis zu einem Monat nach Aufbringen der reflektiven Beschichtung 54 entlang einer gedachten Linie 517 senkrecht zum Oberflächenbereich 511 mit der reflektiven Beschichtung 54 über eine Länge 517 von 500 nm oder mehr einen Wasserstoffgehalt von mehr als 5×10¹⁸ Moleküle/ cm³ aufweisen und innerhalb eines Zeitraums ab einem Monat nach Aufbringen der reflektiven Beschichtung 54 bis zu sieben Jahren nach Aufbringen der reflektiven Beschichtung 54 immer noch einen Wasserstoffgehalt von mehr als 1×10¹⁸ Moleküle/cm³ aufweisen. Bei einem reflektiven optischen Element, dessen Substrat einen weiteren Oberflächenbereich aufweist, der sich auf einer dem Oberflächenbereich mit der reflektiven Beschichtung abgewandten Seite des Substrats befindet und keine reflektive Beschichtung aufweist, wie dies etwa im in Figur 3 dargestellten Beispiel der Fall ist, kann das Substrat über besagten Zeitraum entlang der gedachten Linie 513 über eine weitere Länge von 500 nm oder mehr mit einem Abstand von nicht mehr als 2 mm von der Oberfläche des weiteren Oberflächenbereichs einen Wasserstoffgehalt von nicht mehr als die Hälfte und nicht weniger als ein Zwanzigstel des Wasserstoffgehalts über der Länge im Abstand von nicht mehr als 1 mm von der reflektiven Beschichtung aufweisen. Denn an der Seite des reflektiven optischen Elements ohne reflektive Beschichtung kann der Wasserstoff über die Zeit aus dem Substrat herausdiffundieren. Dabei wandert das Maximum der Verteilung des Wasserstoffgehalts langsam ins Innere des Substrats. Der genaue Wasserstoffgehalt im weiteren Oberflächenbereich und dessen Verteilung zu einem bestimmten Zeitpunkt hängen insbesondere von der konkreten Beladung mit Wasserstoff ab.

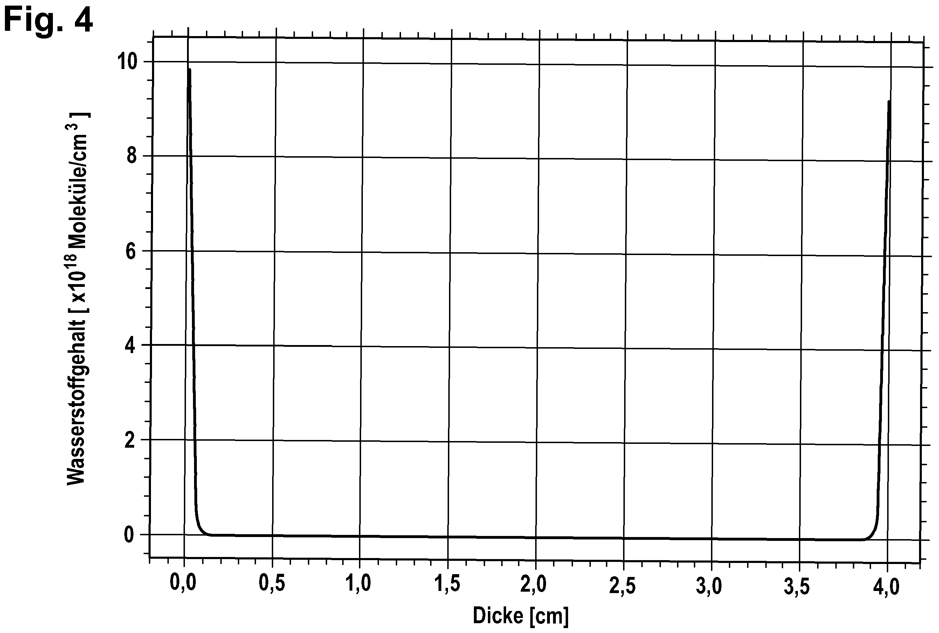

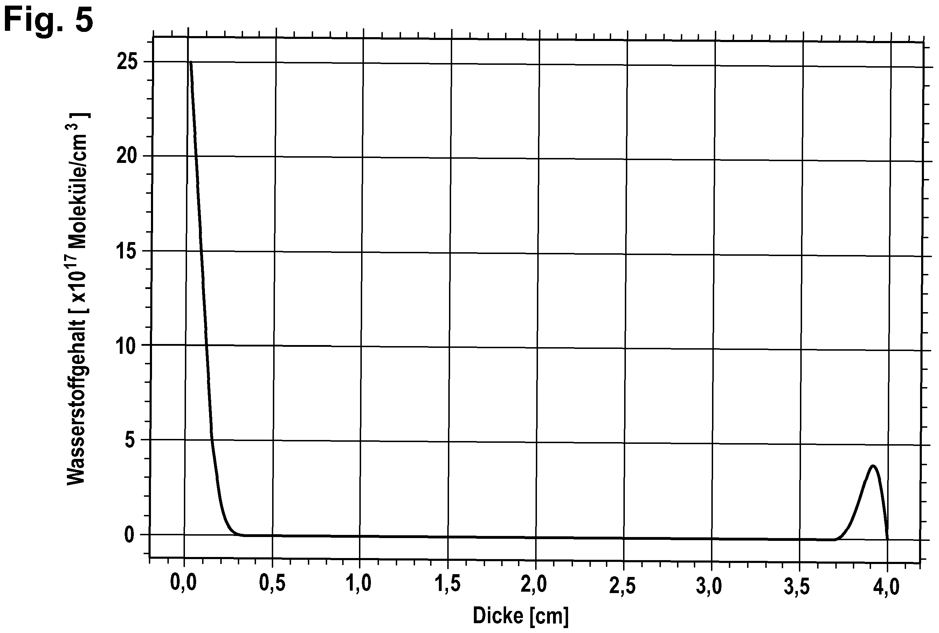

Exemplarisch sei auf die Figuren 4 und 5 hingewiesen, in denen eine Simulation dargestellt ist, bei der von einem Beladen von titandotierten Quarzglas bei einem Wasserstoffpartialdruck von 25 bar und einer Temperatur von ca. 250°C über 5 h ausgegangen wird. Die dadurch erhaltene Wasserstoffgehaltsverteilung ist in Figur 4 dargestellt. Auf der x-Achse ist die Dicke des Substrats in mm aufgetragen, wobei das Substrat eine Dicke von 4 cm aufweist und auf der bei 0 cm befindlichen Oberfläche eine reflektive Beschichtung angenommen wird, die als Diffusionsbarriere für Wasserstoff wirkt, wie etwa ein Molybdän-Silizium-Viellagensystem. An der entgegengesetzten Fläche bei 4 cm ist die Oberfläche hingegen unbeschichtet, so dass der im Bereich dieser Oberfläche befindliche Wasserstoff über die Zeit aus dem Substrat herausdiffundieren kann. Nach dem Beladen liegt an beiden Oberflächen ein Wasserstoffgehalt von 10×10¹⁸ Moleküle/cm³ vor, der innerhalb eines Abstands von einem Millimeter von der jeweiligen Oberfläche nur noch knapp ein Zehntel davon beträgt.

In Figur 5 ist der simulierte Zustand nach 7 Jahren Lagerung bei Raumtemperatur dargestellt. Angrenzend an die reflektive Beschichtung bei 0 mm hat sich die Verteilung des Wasserstoffgehalts etwas verbreitert und in der Amplitude um den Faktor 4 verringert. Auf der unbeschichteten, entgegengesetzten Seite des Substrats bei 4 mm ist die Verteilung in der Amplitude um einen Faktor von mehr als 20 verringert und hat sich die Verteilung des Wasserstoffgehalts ebenfalls etwas verbreitert.

Es sei darauf hingewiesen, dass dieser Effekt hier der besseren Deutlichkeit wegen in Bezug auf die Oberfläche mit reflektiver Beschichtung und entgegengesetzter Oberfläche ohne Beschichtung diskutiert wird. Aber selbstverständlich wird dieser Effekt auch für anders positionierte Oberflächen, wie etwa Seitenflächen erwartet. Auch dort ist über die Zeit ein stärkerer Abfall des Wasserstoffgehalts über die Zeit zu erwarten, wenn die jeweilige Fläche nach dem Beladen mit Wasserstoff nicht beschichtet wird, als wenn sie beschichtet wird.

In einer Abwandlung der in Verbindung mit Figur 3 beschriebenen Variante kann das Substrat 51 neben dem hohen Wasserstoffgehalt zumindest und bevorzugt in der Nähe des Oberflächenbereichs 511 auch einen Anteil von Si-O-O-Si-Bindungen von mindestens 1*10¹⁶/cm³ und/oder einen Anteil von Si-Si-Bindungen von mindestens 1*10¹⁶/cm³ aufweisen, um das Relaxieren nach Kompaktierung effektiver zu mindern.

Die Hydroxyl- und Wasserstoffgehalte wie auch der Anteil an Störstellen in der Quarzglasmatrix wie Si-O-O-Si-Bindungen oder Si-Si-Bindungen können beispielsweise über Ramanspektroskopie am fertigen Substrat bzw. reflektiven optischen Element mit Auflösungen bis in den Submillimeterbereich bestimmt werden. Mittels konfokaler Ramanspektroskopie können auch Auflösungen im Submikrometerbereich erreicht werden. Über Ramanspektroskopie kann auch die fiktive Glasübergangstemperatur unterschiedlicher Substratbereiche beispielsweise über das Verhältnis von drei- zu vierzähligen SiO₂-Ringen bestimmt werden. Je nachdem ob es sich um einen unkorrigierten oder einen zur Korrektur durch energiereiche Bestrahlung kompaktierten Bereich handelt, sind unterschiedliche fiktive Glasübergangstemperaturen sowie unterschiedliche Defektdichten zu erwarten.

Bei den in den Figuren 2 oder 3 dargestellten Ausführungsformen eines reflektiven optischen Elements 50 weist das Substrat 51 wenigstens entlang einer gedachten Fläche 514 mit einem festen Abstand zwischen 1 µm und 100 µm von der Oberfläche 512 eine Variation der Dichte von ca. 1 Vol-% auf. Der besseren Übersichtlichkeit halber ist dies nur in Figur 2 dargestellt. Nach dem Beschichten des Substrats wurde gemäß dem in der WO 2013/050199 A1 beschriebenen Vorgehen eine Feinkorrektur des Oberflächenverlaufs durchgeführt. Insbesondere wurde die Korrektur durch eine lokale Kompaktierung im Bereich 516 des Substrats mittels Elektronenstrahl durchgeführt, wobei die Elektronenenergie so gewählt wurde, dass die Elektronen durch die reflektierende Beschichtung 54 mit Schutzschicht 53 dringen und in den ersten Mikrometern im Substrat 51 unterhalb der reflektierenden Beschichtung 54 vollständig deponiert werden. Dadurch wird bei allen Substratvarianten das Titan-dotierte Quarzglas um bis zu ca. 1% kompaktiert, was im hier dargestellten Beispiel zu einer Oberflächendeformation von ca. 10 nm führt.

Die hier vorgeschlagenen reflektiven optischen Elemente zeigen eine verbesserte Langzeitstabilität der Oberflächenform auf. Insbesondere ist das Relaxieren der durch Kompaktieren eingeschriebenen Korrekturen vermindert. Auch nach beispielsweise sieben Jahren kann erwartet werden, dass die Korrekturen noch eine Amplitude von über zwei Dritteln ihrer ursprünglichen Amplitude aufweisen.

Weitere bevorzugte Anwendungen der auf den hier vorgeschlagenen Substraten basierenden reflektiven optischen Elemente sind neben der EUV-Lithographie u.a. optische Systeme für Inspektionssysteme für beispielsweise Wafer oder Masken oder für spektroskopische Anwendungen, etwa in der Astrophysik, insbesondere der extraterrestrischen Physik.

### Bezugszeichen

- 10: EUV-Lithographievorrichtung
- 12: EUV-Strahlungsquelle
- 13: Kollektorspiegel
- 14: Beleuchtungssystem
- 15: erster Spiegel
- 16: zweiter Spiegel
- 17: Maske
- 18: dritter Spiegel
- 19: vierter Spiegel
- 20: Projektionssystem
- 21: Wafer
- 50: Kollektorspiegel
- 51: Substrat
- 511: Oberflächenbereich
- 512: Oberfläche
- 514: Linie
- 513: Linie
- 515: Bereich
- 516: Bereich
- 517: Länge
- 53: Schutzlage
- 54: Viellagensystem
- 55: Lagenpaar
- 56: Absorber
- 57: Spacer

## Patentansprüche

1. Substrat für ein reflektives optisches Element für den extrem-ultravioletten Wellenlängenbereich aus Titan-dotiertem Quarzglas, das einen zu beschichtenden Oberflächenbereich aufweist, **dadurch gekennzeichnet, dass** das Titan-dotierte Quarzglas mindestens in der Nähe des Oberflächenbereichs (511) einen Anteil von Si-O-O-Si-Bindungen von mindestens 1*10¹⁶/cm³ oder einen Anteil von Si-Si-Bindungen von mindestens 1*10¹⁶/cm³ aufweist.

2. Substrat nach Anspruch 1, **dadurch gekennzeichnet, dass** das Titan-dotierte Quarzglas mindestens in der Nähe des Oberflächenbereichs (511) einen Anteil von Si-O-O-Si-Bindungen von mindestens 1*10¹⁷/cm³, bevorzugt mindestens 1*10¹⁸/cm³, besonders bevorzugt mindestens 1*10¹⁹/cm³ oder einen Anteil von Si-Si-Bindungen von mindestens 1*10¹⁷/cm³, bevorzugt mindestens 1*10¹⁸/cm³, besonders bevorzugt mindestens 1*10¹⁹/cm³ aufweist.

3. Substrat nach Anspruch 1 oder 2, **dadurch gekennzeichnet, dass** das Titan-dotierte Quarzglas mindestens in der Nähe des Oberflächenbereichs (511) einen mittleren Hydroxylgehalt von höchstens 100 Gew.-ppm aufweist.

4. Substrat nach Anspruch 3, **dadurch gekennzeichnet, dass** das Titan-dotierte Quarzglas mindestens in der Nähe des Oberflächenbereichs (511) einen Wasserstoffgehalt von weniger als 1×10¹⁶ Moleküle/cm³ aufweist.

5. Substrat nach einem der Ansprüche 1 bis 4, **dadurch gekennzeichnet, dass** das Titan-dotierte Quarzglas mindestens in der Nähe des Oberflächenbereichs (511) Siliziumfluorid oder Siliziumchlorid aufweist.

6. Substrat nach Anspruch 1 oder 2, **dadurch gekennzeichnet, dass** das Titan-dotierte Quarzglas entlang einer gedachten Linie (513) senkrecht zum Oberflächenbereich (511) über eine Länge (517) von 500 nm oder mehr einen Wasserstoffgehalt von mehr als 5×10¹⁸ Moleküle/cm³ aufweist.

7. Reflektives optisches Element für den extrem-ultravioletten Wellenlängenbereich mit einem Substrat gemäß einem der Ansprüche 1 bis 6, das einen Oberflächenbereich mit einer reflektiven Beschichtung aufweist.

8. Reflektives optisches Element nach Anspruch 7 in Abhängigkeit von Anspruch 1 bis 3, 5 oder 6, **dadurch gekennzeichnet, dass** das Substrat (51) entlang einer gedachten Linie (513) senkrecht zum Oberflächenbereich (511) mit der reflektiven Beschichtung (54) über eine Länge (517) von 500 nm oder mehr einen Wasserstoffgehalt von mehr als 5×10¹⁸ Moleküle/cm³, bevorzugt mehr als 1×10¹⁹ Moleküle/cm³, besonders bevorzugt von mehr als 1×10²⁰ Moleküle/cm³ aufweist.

9. Reflektives optisches Element nach Anspruch 8, **dadurch gekennzeichnet, dass** die Länge (517) von 500 nm oder mehr einen Abstand zur reflektiven Beschichtung (54) von nicht mehr als 1 mm, bevorzugt nicht mehr als 100 µm, besonders bevorzugt nicht mehr als 20 µm, ganz besonders bevorzugt nicht mehr als 5 µm aufweist.

10. Reflektives optisches Element nach Anspruch 8 oder 9, **dadurch gekennzeichnet, dass** das Substrat (51) entlang der gedachten Linie (513) senkrecht zum Oberflächenbereich (511) mit der reflektiven Beschichtung (54) in einem Abstand zu dieser von mindestens 1 mm, bevorzugt mindestens 1 cm einen Wasserstoffgehalt von weniger als 5×10¹⁷ Moleküle/cm³, bevorzugt weniger als 1×10¹⁷ Moleküle/cm³, besonders bevorzugt von weniger als 1×10¹⁶ Moleküle/cm³ aufweist.

11. Reflektives optisches Element nach einem der Ansprüche 8 bis 10, **dadurch gekennzeichnet, dass** das Substrat (51) innerhalb eines Zeitraums von bis zu einem Monat nach Aufbringen der reflektiven Beschichtung (54) entlang einer gedachten Linie (513) senkrecht zum Oberflächenbereich (511) mit der reflektiven Beschichtung (54) über eine Länge (517) von 500 nm oder mehr einen Wasserstoffgehalt von mehr als 5×10¹⁸ Moleküle/cm³ aufweist und innerhalb eines Zeitraums ab einem Monat nach Aufbringen der reflektiven Beschichtung (54) bis zu sieben Jahren nach Aufbringen der reflektiven Beschichtung (54) einen Wasserstoffgehalt von mehr als 1×10¹⁸ Moleküle/cm³.

12. Reflektives optisches Element nach den Ansprüchen 9 und 11, dessen Substrat einen weiteren Oberflächenbereich aufweist, der sich auf einer dem Oberflächenbereich mit der reflektiven Beschichtung abgewandten Seite des Substrats befindet und keine reflektive Beschichtung aufweist, **dadurch gekennzeichnet, dass** das Substrat (51) entlang der gedachten Linie (513) über eine weitere Länge von 500 nm oder mehr mit einem Abstand von nicht mehr als 2 mm von der Oberfläche des weiteren Oberflächenbereichs einen Wasserstoffgehalt von nicht mehr als die Hälfte und nicht weniger als ein Zwanzigstel des Wasserstoffgehalts über der Länge (517) im Abstand von nicht mehr als 1 mm von der reflektiven Beschichtung aufweist.

13. Optisches System mit einem reflektiven optischen Element gemäß einem der Ansprüche 7 bis 12.

14. EUV-Lithographievorrichtung mit einem optischen System gemäß Anspruch 13 oder mit einem reflektiven optischen Element gemäß einem der Ansprüche 7 bis 12.

## Claims

1. Substrate for a reflective optical element for the extreme ultraviolet wavelength range made of titanium-doped quartz glass that has a surface region that is to be coated, **characterized in that** the titanium-doped quartz glass has at least in the vicinity of the surface region (511) a proportion of Si-O-O-Si bonds of at least 1*10¹⁶/cm³ or a proportion of Si-Si bonds of at least 1*10¹⁶/cm³.

2. Substrate according to Claim 1, **characterized in that** the titanium-doped quartz glass has at least in the vicinity of the surface region (511) a proportion of Si-O-O-Si bonds of at least 1*10¹⁷/cm³, preferably at least 1*10¹⁸/cm³, with particular preference at least 1*10¹⁹/cm³ or a proportion of Si-Si bonds of at least 1*10¹⁷/cm³, preferably at least 1*10¹⁸/cm³, with particular preference at least 1*10¹⁹/cm³.

3. Substrate according to Claim 1 or 2, **characterized in that** the titanium-doped quartz glass has an average hydroxyl content of at most 100 ppm by weight at least in the vicinity of the surface region (511).

4. Substrate according to Claim 3, **characterized in that** the titanium-doped quartz glass has a hydrogen content of less than 1×10¹⁶ molecules/cm³ at least in the vicinity of the surface region (511).

5. Substrate according to one of Claims 1 to 4, **characterized in that** the titanium-doped quartz glass has silicon fluoride or silicon chloride at least in the vicinity of the surface region (511).

6. Substrate according to Claim 1 or 2, **characterized in that** the titanium-doped quartz glass has a hydrogen content of more than 5×10¹⁸ molecules/cm³ along an imaginary line (513) perpendicular to the surface region (511) over a length (517) of 500 nm or more.

7. Reflective optical element for the extreme ultraviolet wavelength range having a substrate according to one of Claims 1 to 6 that has a surface region with a reflective coating.

8. Reflective optical element according to Claim 7 when dependent on Claim 1 to 3, 5 or 6, **characterized in that** the substrate (51) has a hydrogen content of more than 5×10¹⁸ molecules/cm³, preferably more than 1×10¹⁹ molecules/cm³, with particular preference more than 1×10²⁰ molecules/cm³, along an imaginary line (513) perpendicular to the surface region (511) with the reflective coating (54) over a length (517) of 500 nm or more.

9. Reflective optical element according to Claim 8, **characterized in that** the length (517) of 500 nm or more has a distance from the reflective coating (54) of no more than 1 mm, preferably no more than 100 µm, with particular preference no more than 20 µm, with very particular preference no more than 5 µm.

10. Reflective optical element according to Claim 8 or 9, **characterized in that** the substrate (51) has a hydrogen content of less than 5×10¹⁷ molecules/cm³, preferably less than 1×10¹⁷ molecules/cm³, with particular preference less than 1×10¹⁶ molecules/ cm³, along the imaginary line (513) perpendicular to the surface region (511) with the reflective coating (54) at a distance therefrom of at least 1 mm, preferably at least 1 cm.

11. Reflective optical element according to one of Claims 8 to 10, **characterized in that** the substrate (51) has a hydrogen content of more than 5×10¹⁸ molecules/cm³ within a time period of up to one month after application of the reflective coating (54) along an imaginary line (513) perpendicular to the surface region (511) with the reflective coating (54) over a length (517) of 500 nm or more and has a hydrogen content of more than 1×10¹⁸ molecules/cm³ within a time period from one month after application of the reflective coating (54) up to seven years after application of the reflective coating (54).

12. Reflective optical element according to Claims 9 and 11, the substrate of which has a further surface region, which is located on a side of the substrate facing away from the surface region with the reflective coating and has no reflective coating, **characterized in that** the substrate (51) has, along the imaginary line (513) over a further length of 500 nm or more at a distance of no more than 2 mm from the surface of the further surface region, a hydrogen content of no more than half and no less than one twentieth of the hydrogen content over the length (517) at a distance of no more than 1 mm from the reflective coating.

13. Optical system having a reflective optical element according to one of Claims 7 to 12.

14. EUV lithography apparatus having an optical system according to Claim 13 or having a reflective optical element according to one of Claims 7 to 12.

## Revendications

1. Substrat pour un élément optique réfléchissant pour la plage de longueurs d'onde dans l'extrême ultraviolet en verre quartzeux dopé au titane, qui présente une zone superficielle à revêtir, **caractérisé en ce que** le verre quartzeux dopé au titane présente, au moins au voisinage de la zone superficielle (511), une proportion de liaisons Si-O-O-Si d'au moins 1*10¹⁶/ cm³ ou une proportion de liaisons Si-Si d'au moins 1*10¹⁶/cm³.

2. Substrat selon la revendication 1, **caractérisé en ce que** le verre quartzeux dopé au titane présente, au moins au voisinage de la zone superficielle (511), une proportion de liaisons Si-O-O-Si d'au moins 1*10¹⁷/cm³, de préférence d'au moins 1*10¹⁸/cm³, d'une manière particulièrement préférée d'au moins 1*10¹⁹/cm³ ou une proportion de liaisons Si-Si d'au moins 1*10¹⁷/cm³, de préférence d'au moins 1*10¹⁸/cm³, d'une manière particulièrement préférée d'au moins 1*10¹⁹/cm³.

3. Substrat selon la revendication 1 ou 2, **caractérisé en ce que** le verre quartzeux dopé au titane présente, au moins au voisinage de la zone superficielle (511), une teneur moyenne en groupes hydroxyle d'au plus 100 ppm en poids.

4. Substrat selon la revendication 3, **caractérisé en ce que** le verre quartzeux dopé au titane présente, au moins au voisinage de la zone superficielle (511), une teneur en hydrogène inférieure à 1 × 10¹⁶ molécules/cm³.

5. Substrat selon l'une des revendications 1 à 4, **caractérisé en ce que** le verre quartzeux dopé au titane comprend, au moins au voisinage de la zone superficielle (511), du fluorure de silicium ou du chlorure de silicium.

6. Substrat selon la revendication 1 ou 2, **caractérisé en ce que** le verre quartzeux dopé au titane présente, le long d'une ligne imaginaire (513) perpendiculaire à la zone superficielle (511), sur une longueur (517) de 500 nm ou plus, une teneur en hydrogène supérieure à 5 × 10¹⁸ molécules/cm³.

7. Élément optique réfléchissant pour la plage de longueurs d'onde dans l'extrême ultraviolet, comportant un substrat selon l'une des revendications 1 à 6, qui présente une zone superficielle munie d'un revêtement réfléchissant.

8. Élément optique réfléchissant selon la revendication 7 dépendante des revendications 1 à 3, 5 ou 6, **caractérisé en ce que** le substrat (51) présente, le long d'une ligne imaginaire (513) perpendiculaire à la zone superficielle (511) munie d'un revêtement réfléchissant (54) sur une longueur (517) de 500 nm ou plus une teneur en hydrogène supérieure à 5 × 10¹⁸ molécules/cm³, de préférence supérieure à 1 × 10¹⁹ molécules/cm³, d'une manière particulièrement préférée supérieure à 1 × 10²⁰ molécules/cm³.

9. Élément optique réfléchissant selon la revendication 8, **caractérisé en ce que** la longueur (517) de 500 nm ou plus présente un écart, par rapport au revêtement réfléchissant (54), non supérieur à 1 mm, de préférence non supérieur à 100 µm, d'une manière particulièrement préférée non supérieur à 20 µm, tout spécialement non supérieur à 5 µm.

10. Élément optique réfléchissant selon la revendication 8 ou 9, **caractérisé en ce que** le substrat (51) présente, le long de la ligne imaginaire (513) perpendiculairement à la zone superficielle (511) munie du revêtement réfléchissant (54), à une distance par rapport à ce dernier d'au moins 1 mm, de préférence d'au moins 1 cm, une teneur en hydrogène inférieure à 5 × 10¹⁷ molécules/cm³, de préférence inférieure à 1 × 10¹⁷ molécules/cm³, d'une manière particulièrement préférée inférieure à 1 × 10¹⁶ molécules/cm³.

11. Élément optique réfléchissant selon l'une des revendications 8 à 10, **caractérisé en ce que** le substrat (51), sur une durée allant jusqu'à un mois après application du revêtement réfléchissant (54) présente le long d'une ligne imaginaire (513) perpendiculairement à la zone superficielle (511) munie du revêtement réfléchissant (54) sur une longueur (517) de 500 nm ou plus une teneur en hydrogène supérieure à 5 × 10¹⁸ molécules/cm³ et, sur une durée à compter d'un mois après application du revêtement réfléchissant (54) et jusqu'à sept mois après application du revêtement réfléchissant (54) une teneur en hydrogène supérieure à 1 × 10¹⁸ molécules/cm³.

12. Élément optique réfléchissant selon l'une des revendications 9 et 11, dont le substrat comprend une zone superficielle supplémentaire qui se trouve sur une face du substrat opposée à la zone superficielle munie du revêtement réfléchissant et ne comprend aucun revêtement réfléchissant, **caractérisé en ce que** le substrat (51) présente, le long de la ligne imaginaire (513) sur une longueur supplémentaire de 500 nm ou plus présentant un écart supérieur à 2 mm par rapport à la surface de la zone superficielle supplémentaire, une teneur en hydrogène non supérieure à la moitié et non inférieure au vingtième de la teneur en hydrogène sur la longueur (517) présentant un écart non supérieur à 1 mm par rapport au revêtement réfléchissant.

13. Système optique comportant un élément optique réfléchissant selon l'une des revendications 7 à 12.

14. Dispositif de lithographie en EUV comportant un système optique selon la revendication 13 ou un élément optique réfléchissant selon l'une des revendications 7 à 12.
